# EUROPÄISCHE PATENTSCHRIFT

(11) **EP 1 461 522 B1**
(45) Veröffentlichungstag und Bekanntmachung des Hinweises auf die Patenterteilung: **17.08.2005**
(21) Anmeldenummer: 02794989.0
(22) Anmeldetag: 12.12.2002
(51) Int. Cl.: F02D 41/18, F02D 41/22, G01F 1/69, G01F 1/68

(54) **VERFAHREN ZUM BETREIBEN EINER BRENNKRAFTMASCHINE**
METHOD FOR OPERATING AN INTERNAL COMBUSTION ENGINE
PROCEDE POUR FAIRE FONCTIONNER UN MOTEUR A COMBUSTION INTERNE

(30) Priorität: 27.12.2001 DE 10163751
(43) Veröffentlichungstag der Anmeldung: 29.09.2004
(73) Patentinhaber: ROBERT BOSCH GMBH, 70442 Stuttgart (DE)
(72) Erfinder: PIWONKA, Fridolin, 71732 Tamm (DE); FELDMANN, Benedikt, 52072 Aachen (DE); LENZING, Thomas, 71726 Benningen (DE); MUELLER, Lutz, 72631 Aichtal (DE); GRIMM, Wolfgang, Allison Park, PA 15101 (US); KLAUSNER, Markus, 70839 Gerlingen (DE); PFOTZER, Reinhold, I-10045 Piossasco (IT); BECKER, Wolfgang, A-3425 Langenlebarn (AT)
(86) Internationale Anmeldenummer: PCT/DE2002/004546
(87) Internationale Veröffentlichungsnummer: WO 2003/056161

(56) Entgegenhaltungen:
- EP-A- 1 087 213
- EP-A- 1 229 238
- DE-A- 3 935 778
- DE-A- 10 063 752
- DE-A- 19 636 097
- DE-A- 19 750 496
- DE-A- 19 858 656
- DE-A- 19 933 665
- US-A- 5 241 857
- US-A- 5 515 714
- US-A- 5 635 635
- PATENT ABSTRACTS OF JAPAN vol. 010, no. 207 (M-500), 19. Juli 1986 (1986-07-19) & JP 61 049144 A (MAZDA MOTOR CORP), 11. März 1986 (1986-03-11)
- BOSCH R: "VOLUMENDURCHFLUSS QV = V.A UND MASSENDURCHFLUSS QM = V.A" , AIR FLOW SENSOR WITH TEMPERATURE SENSOR, MASSEN DURCHFLUSSMESSER, XX, XX, PAGE(S) 117-118 XP002132294 das ganze Dokument

## Beschreibung

### Stand der Technik

Die Erfindung betrifft ein Verfahren zum Betreiben einer Brennkraftmaschine insbesondere eines Kraftfahrzeugs, mit einem Steuergerät zur Steuerung/Regelung der Brennkraftmaschine in Abhängigkeit eines Luftmassensensorsignals eines ersten Luftmassensensors.

Ferner betrifft die Erfindung eine Brennkraftmaschine, insbesondere für ein Kraftfahrzeug, mit einem Steuergerät zur Steuerung/Regelung der Brennkraftmaschine in Abhängigkeit eines Luftmassensensorsignals eines ersten Luftmassensensors.

Darüber hinaus betrifft die Erfindung ein Steuergerät für eine Brennkraftmaschine insbesondere eines Kraftfahrzeugs, zur Steuerung/Regelung der Brennkraftmaschine in Abhängigkeit eines Luftmassensensorsignals eines ersten Luftmassensensors.

Bekannte Betriebsverfahren haben den Nachteil, dass die Steuerung/Regelung der Brennkraftmaschine im Falle einer Störung des Luftmassensensorsignals bzw. des Luftmassensensors selbst derart beeinflusst wird, dass die Brennkraftmaschine nicht mehr im optimalen Betriebspunkt arbeitet.

Beispielsweise kann es bei Fahrt auf nassem Untergrund vorkommen, dass Spritzwasser in einen Ansaugtrakt der Brennkraftmaschine gelangt. Dort kann es einen Luftfilter durchdringen und einen im Ansaugtrakt befindlichen Luftmassensensor benetzen. Besonders nachteilig ist dieser auch als Wassereintrag bezeichnete Effekt bei den häufig eingesetzten Heißfilm-Luftmassensensoren, die eine Heizfläche aufweisen, welche bei Kontakt mit in flüssiger Phase befindlichem Wasser spontan abgekühlt wird, wodurch das von dem Luftmassensensor erzeugte Luftmassensensorsignal verfälscht wird.

Das die Brennkraftmaschine steuernde/regelnde Steuergerät berechnet auf Basis des verfälschten Luftmassensensorsignals einen falschen Wert für das einzustellende Luft-Kraftstoff-Verhältnis, so dass die Brennkraftmaschine, wie eingangs bereits erwähnt, nicht mehr im optimalen Betriebspunkt arbeitet.

Darüber hinaus werden die Emissionswerte der Brennkraftmaschine beeinflußt, da ein Teil des eingetragenen Wassers bzw. des sich daraus bildenden Wasserdampfes in einen Brennraum der Brennkraftmaschine gelangt und einen Teil der zur Verbrennung erforderlichen Luftmenge verdrängt.

Die DE 197 50 496 (D1) offenbart einen Luftmassenmesser bei dem zusätzlich zur Messung der Luftmassen die Luftfeuchtigkeit durch einen Feuchtesensor erfasst wird. Darüber hinaus kann es vorgesehen sein den Saugrohrdruck zu messen.

Die DE 199 33 665 (D2) offenbart einen Luftmassenmesser mit einer Auswerteschaltung die anhand der Amplitude eines Signals des Luftmassenmessers einen Messfehler einer pulsierenden Luftmasse in einem Saugrohr kompensiert.

Die US 5 241 857 (D3) offenbart ein Verfahren um Messfehler bei einem Heißfilm-Luftmassen-Messer durch Rückströmungen zu korrigieren. Hierzu wird in das Luftvolumen mit dem Heißfilm-Luftmassen-Messer als erste einer Methode und anhand einer zweiten davon unabhängigen Methode bestimmt. Bei Vorliegen einer Betriebsart bei der keine Rückströmungen vorliegen werden die Signale der ersten und zweiten Methode kalibriert. Das Luftvolumen anhand der zweiten Methode wird beispielsweise unter Berücksichtigung des Winkels in der Drosselklappe und der Drehzahl bestimmt. Je nach vorliegen einer bestimmten Betriebsart wird entweder das Signal der ersten Methode oder der zweiten Methode genutzt.

### Aufgabe und Vorteile der Erfindung

Demgemäß ist es Aufgabe der vorliegenden Erfindung, ein Verfahren zum Betreiben einer Brennkraftmaschine bereitzustellen, bei dem der Einfluss einer insbesondere das Luftmassensensorsignal beeinflussenden Störgröße auf die Regelung der Brennkraftmaschine verringert ist.

Diese Aufgabe wird bei einem Verfahren der eingangs genannten Art dadurch gelöst, dass mindestens ein erstes Hilfssignal verwendet wird und dass in Abhängigkeit von dem ersten Hilfssignal der Einfluss einer das Luftmassensensorsignal beeinflussenden Störgröße auf die Regelung der Brennkraftmaschine verringert wird.

Die erfindungsgemäße Miteinbeziehung des ersten Hilfssignals ermöglicht es, dass die Brennkraftmaschine trotz einer Störung des Luftmassensensorsignals im optimalen Betriebspunkt arbeiten kann. Im Vergleich zu herkömmlichen Betriebsverfahren für Brennkraftmaschinen ist somit auch bei Fahrt auf nassem Untergrund eine optimale Leistungsabgabe der Brennkraftmaschine sowie die Einhaltung gesetzlich vorgeschriebener Grenzwerte für die Emissionen der Brennkraftmaschine gewährleistet.

Eine vorteilhafte Ausführungsform des erfindungsgemäßen Betriebsverfahrens ist dadurch gekennzeichnet, dass ein Vergleich des ersten Hilfssignals oder eines aus dem ersten Hilfssignal abgeleiteten Signals mit dem Luftmassensensorsignal oder einem aus dem Luftmassensensorsignal abgeleiteten Signal durchgeführt wird, wobei ein Vergleichsergebnis erhalten wird.

Der Vergleich des ersten Hilfssignals mit dem Luftmassensensorsignal ermöglicht es, im Falle stark unterschiedlichen Signalverhaltens auf eine Störung des Luftmassensensors zu schließen. Auf diese Weise kann z.B. eine Benetzung der Heizfläche eines Heißfilm-Luftmassensensors mit Wasser erkannt werden. Es ist auch möglich, andersartige Störungen des Luftmassensensors, wie z.B. einen durch mechanische Beschädigung einer Signalleitung verursachten Signalabriss des Sensors zu erkennen.

Besonders vorteilhaft ist der Vergleich eines aus dem ersten Hilfssignal abgeleiteten Signals direkt mit dem Luftmassensensorsignal oder auch mit einem aus dem Luftmassensensorsignal abgeleiteten Signal. Dabei ergibt sich die Möglichkeit, jeweils nur bestimmte Signalkomponenten des ersten Hilfssignals mit in den Vergleich einzubeziehen.

Eine weitere Ausführungsform des erfindungsgemäßen Betriebsverfahrens ist dadurch gekennzeichnet, dass in Abhängigkeit von dem Vergleichsergebnis eine Regelgröße für die Steuerung der Brennkraftmaschine erhalten wird. Die Verwendung dieser Regelgröße erlaubt es, die Steuerung/Regelung der Brennkraftmaschine derart anzupassen, dass eine Kompensation des Einflusses der Störgröße auf das Luftmassensensorsignal durchgeführt werden kann.

Es ist in einer sehr einfachen Verfahrensvariante möglich, dass die Regelgröße aus der Differenz einer als Sollwert für die in den Ansaugtrakt einströmende Luftmasse interpretierten ersten Hilfsgröße und des Luftmassensensorsignals erhalten wird.

In Weiterbildung dieser Verfahrensvariante ist es zusätzlich möglich, die Regelgröße allein aus dem ersten Hilfssignal zur erhalten, was immer dann zweckmäßig ist, wenn das Luftmassensensorsignal sehr stark von einem zu erwartenden Wert abweicht. Bei einem Totalausfall des Luftmassensensors ist es mit dem erfindungsgemäßen Verfahren immer noch möglich, die Brennkraftmaschine im optimalen Betriebspunkt zu betreiben.

Eine weitere vorteilhafte Ausführungsart des erfindungsgemäßen Betriebsverfahrens ist dadurch gekennzeichnet, dass das erste Hilfssignal aus Zustandsgrößen der Brennkraftmaschine erhalten wird, so dass keine zusätzlichen externen Sensoren erforderlich sind, um das erste Hilfssignal zu erhalten. Vielmehr kann das erste Hilfssignal aus der Stellung eines Fahrpedals, der Drehzahl, der Temperatur sowie weiteren Zustandsgrößen der Brennkraftmaschine ermittelt werden.

Eine weitere, besonders vorteilhafte Ausführungsart der vorliegenden Erfindung ist dadurch gekennzeichnet, dass das erste Hilfssignal aus einem Signal einer Abgassonde wie z.B. einer Lambda-Sonde, erhalten wird. Bei dieser Ausführungsform besteht die Möglichkeit, das Luftmassensensorsignal einer Plausibilitätsprüfung zu unterziehen, da aus dem Signal der Abgassonde unter Kenntnis der eingespritzten Kraftstoffmenge die tatsächlich dem Brennraum zugeführte Luftmasse berechnet werden kann. Das Signal der Abgassonde wird, im Gegensatz zum Luftmassensensorsignal, nicht wesentlich durch in dem Brennraum befindlichen Wasserdampf verfälscht.

Falls das erste Hilfssignal deutlich von dem aus dem Luftmassensensorsignal gewonnenen Luftmassenwert abweicht, kann auf eine - möglicherweise durch im Ansaugtrakt befindliches Wasser hervorgerufene - Störung des ersten Luftmassensensors geschlossen werden. In diesem Fall ist es bei dem erfindungsgemäßen Betriebsverfahren sogar möglich, das gestörte Luftmassensensorsignal zu verwerfen und als Ersatz das erste Hilfssignal als Eingangsgröße für das Steuergerät der Brennkraftmaschine zu verwenden.

Um die im Allgemeinen höhere Dynamik eines Heißfilm-Luftmassensensors im Vergleich zu einer Lambdasonde zu berücksichtigen, kann eine Mittelwertbildung der Messwerte des Luftmassensensorsignals vorgenommen werden. Alternativ ist es möglich, dem Luftmassensensor ein die Dynamik der Regelstrecke der Lambdasonde wiedergebendes Filter nachzuschalten. Bei Ausbildung der Brennkraftmaschine als Diesel-Brennkraftmaschine ist es möglich, als Abgassonde eine Magersonde einzusetzen.

Vorzugsweise erfolgt im Rahmen der vorbeschriebenen Plausibilitätskontrolle des Luftmassensensorsignals ein permanenter Vergleich des Luftmassensensorsignals mit dem Signal der Abgassonde, wobei die Regelgröße zur Regelung/Steuerung der Brennkraftmaschine in Abhängigkeit von dem Vergleichsergebnis erhalten wird.

Eine weitere vorteilhafte Ausführungsform des erfindungsgemäßen Betriebsverfahrens ist dadurch gekennzeichnet, dass der Vergleich folgende Schritte umfasst: Differenzieren des Luftmassensensorsignals, um ein differenziertes Luftmassensensorsignal zu erhalten, Differenzieren des ersten Hilfssignals, um ein differenziertes Hilfssignal zu erhalten, und Differenzbildung aus dem differenzierten Luftmassensensorsignal und dem differenzierten Hilfssignal, um ein Differenzsignal zu erhalten, wobei das Differenzsignal ein Maß für den Unterschied der zeitlichen Änderung zwischen dem Signal des ersten Luftmassensensors und dem ersten Hilfssignal ist. Das erste Hilfsignal wird vorzugsweise aus den Zustandsgrößen der Brennkraftmaschine oder aus dem Signal einer Abgassonde erhalten und kann als Sollwert für die Luftmasse interpretiert werden.

Falls das Differenzsignal einen vorgebbaren Schwellwert überschreitet, was einem stark abweichenden Dynamikverhalten des Luftmassensensorsignals vom ersten Hilfssignal entspricht, wird bei dieser Ausführungsform eine Störung bzw. ein Fehler des Luftmassensensors erkannt. Vorteilhaft für eine einfache Weiterverarbeitung des Differenzsignals ist das Normieren des differenzierten Luftmassensensorsignals auf einen zeitlichen Mittelwert des Luftmassensensorsignals, und das Normieren des differenzierten Hilfssignals auf einen zeitlichen Mittelwert des ersten Hilfssignals sowie Betragsbildung des Differenzsignals, um ein positives Differenzsignal zu erhalten. Schließlich wird das Differenzsignal mit mindestens einem vorgebbaren Schwellwert verglichen. Bleibt die vorstehend genannte Betragsbildung aus, so sind entsprechend zwei Schwellwerte für das Differenzsignal zu wählen.

Der Schwellwert erlaubt es, den maximalen Wert / die extremalen Werte des Differenzsignals festzulegen, bei dem / denen eine Differenz zwischen dem Luftmassensensorsignal und dem ersten Hilfssignal noch nicht als Störung des Luftmassensensorsignals aufgefaßt wird.

Im Falle eines einzigen Schwellwerts wird bei dessen Überschreitung das erste Hilfssignal als Regelgröße erhalten. Das Luftmassensensorsignal wird als Regelgröße erhalten, wenn das Vergleichsergebnis angibt, dass das Differenzsignal kleiner oder gleich dem Schwellwert ist. Ein analoges Vorgehen ist im Falle von zwei Schwellwerten vorgeschlagen.

Bei einer weiteren vorteilhaften Ausführungsförm des erfindungsgemäßen Betriebsverfahrens wird das erste Hilfssignal aus einem Signal eines zweiten Luftmassensensors erhalten. Der zusätzliche zweite Luftmassensensor ermöglicht ebenso wie die Abgassonde eine Plausibilitätskontrolle des Luftmassensensorsignals des ersten Luftmassensensors.

Eine andere vorteilhafte Ausführungsform der vorliegenden Erfindung sieht vor, dass das erste Hilfssignal aus einem Signal eines bereits vorhandenen Regensensors des Kraftfahrzeugs erhalten wird. Regensensoren werden beispielsweise zur Scheibenwischersteuerung eingesetzt und das von ihnen gelieferte Signal kann als ein Maß für die Niederschlagsmenge verwendet werden. Aus der Niederschlagsmenge, die mit der das Luftmassensensorsignal beeinflussenden Störgröße, nämlich der auf die Heizfläche des Heißfilm-Luftmassensensors auftreffenden Wassermenge, korreliert ist, kann die Regelgröße ermittelt werden.

Eine weitere vorteilhafte Ausführungsform der vorliegenden Erfindung ist dadurch gekennzeichnet, dass das erste Hilfssignal aus einem Signal eines kapazitiven Sensors erhalten wird, wobei der kapazitive Sensor als integraler Bestandteil des ersten Luftmassensensors ausgebildet ist. Eine besonders kleinbauende Variante ergibt sich daraus, dass die Oberfläche des bereits vorhandenen ersten Luftmassensensors als eine erste Kondensatorplatte des kapazitiven Sensors verwendet wird. Eine zweite Kondensatorplatte des kapazitiven Sensors kann bspw. in einem Gehäuse des ersten Luftmassensensors angeordnet sein.

Eine weitere vorteilhafte Ausführungsform der vorliegenden Erfindung ist dadurch gekennzeichnet, dass das erste Hilfssignal aus einem Signal eines ohmschen Sensors erhalten wird, wobei der ohmsche Sensor als integraler Bestandteil des ersten Luftmassensensors ausgebildet ist. Eine besonders vorteilhafte Ausführungsform des , erfindungsgemäßen Verfahrens ist dadurch gekennzeichnet, dass der ohmsche Sensor mindestens zwei, vorzugsweise aus korrosionsbeständigem Material bestehende, Elektroden aufweist. Dadurch wird gewährleistet, dass der ohmsche Sensor auch für den Langzeitbetrieb geeignet ist.

Eine weitere sehr vorteilhafte Ausführungsart der vorliegenden Erfindung sieht vor, dass der ohmsche Sensor auf der Oberfläche des ersten Luftmassensensors angeordnet ist.

In vorteilhafter Weiterbildung des erfindungsgemäßen Betriebsverfahrens wird das erste Hilfssignal aus dem Signal des kapazitiven Sensors und dem Signal des ohmschen Sensors erhalten. Auf die Oberfläche des Luftmassensensors auftreffende Wassertropfen sind durch Veränderung der Kapazität bzw. des Leitwerts des jeweiligen Sensors zuverlässig detektierbar. Im Falle eines Heißfilm-Luftmassensensors ist eine Anordnung des kapazitiven /ohmschen Sensors direkt auf der Heizfläche sinnvoll.

Eine besonders vorteilhafte Ausführungsform des erfindungsgemäßen Verfahrens sieht im Rahmen des Vergleichs eine Differenzbildung aus dem ersten Hilfssignal und dem Luftmassensensorsignal vor, um die Regelgröße zu erhalten. Hierbei wird das erste Hilfssignal vorzugsweise aus den Zustandsgrößen der Brennkraftmaschine wie z. B. der Fahrpedalstellung, der Drehzahl und weiteren Größen ermittelt. Das erste Hilfssignal stellt in diesem Fall einen aus den Zustandsgrößen der Brennkraftmaschine erhaltenen Sollwert für die der Brennkraftmaschine zuzuführende Luftmasse dar, wodurch sich die Möglichkeit zum Vergleich mit dem tatsächlich vom Luftmassensensor erfassten Luftmassensignal ergibt.

Besonders vorteilhaft ist die Filterung des Luftmassensensorsignals vor der Differenzbildung, um ein gefiltertes Luftmassensensorsignal zu.erhalten, wodurch nur diejenigen Signalfrequenzen des Luftmassensensorsignals in den Vergleich miteinbezogen werden, die für den Vergleich von Bedeutung sind. Bspw. werden bei Verwendung eines Tiefpasses zur Filterung hochfrequente Signalanteile des Luftmassensensorsignals herausgefiltert und gehen nicht in die Differenzbildung ein.

Aus Messungen ist bekannt, dass derartige hochfrequente Signalanteile des Luftmassensensorsignals durch Auftreffen von Wassertropfen auf die Heizfläche des Luftmassensensors und das damit zusammenhängende spontane Abkühlen der Heizfläche entstehen.

Diese hochfrequenten Signalanteile können als Störgröße aufgefaßt werden, da sie keine direkt auswertbare Information über die durch den Ansaugtrakt tretende Luftmasse beinhalten und wirken sich störend auf die Differenzbildung und somit auch auf die Regelgröße aus. Dies wird durch den erfindungsgemäßen Einsatz eines Tiefpasses verhindert. Es ist dabei besonders zweckmäßig, die Grenzfrequenz des Tiefpasses derart zu wählen, dass ein größtmöglicher Anteil der Signalenergie der hochfrequenten Signalanteile durch den Tiefpass herausgefiltert wird, um den Einfluß der Störgröße zu minimieren.

Eine besonders vorteilhafte Variante des erfindungsgemäßen Verfahrens sieht dazu vor, dass die Grenzfrequenz des Tiefpasses dynamisch und in Abhängigkeit von Zustandsgrößen der Brennkraftmaschine gewählt wird. Auf diese Weise ist eine besonders gute Unterdrückung der Störgröße durch den Tiefpaß möglich. Außerdem können damit weitere störende Signalanteile des Luftmassensensorsignals unterdrückt werden, deren Spektrum vom Betriebszustand der Brennkraftmaschine abhängt.

Eine ganz besonders vorteilhafte, weitere Ausführungsform des erfindungsgemäßen Betriebsverfahrens ist dadurch gekennzeichnet, dass die Grenzfrequenz des Tiefpasses in Abhängigkeit von einem Modell der Brennkraftmaschine gewählt wird. Als Modell kann bspw. ein sog. Streckenmodell der Brennkraftmaschine eingesetzt werden, das in Abhängigkeit der Zustandsgrößen der Brennkraftmaschine eine Information über das Spektrum zulässiger Luftmassensensorsignale im jeweiligen Zustand der Brennkraftmaschine liefert.

Mit dieser Information ist es möglich, die Grenzfrequenz des Tiefpasses so zu wählen, dass nur Spektralanteile des Luftmassensensorsignals in die Differenzbildung mit eingehen, die nicht von einer Störbeeinflussung herrühren.

Eine weitere Ausführungsform des erfindungsgemäßen Verfahrens ist dadurch gekennzeichnet, dass das erste Hilfssignal durch Filterung mit einem Hochpaß aus dem Luftmassensensorsignal erhalten wird und als eine Regelgröße zur Steuerung der Brennkraftmaschine verwendet wird.

Wie bereits erwähnt, ist es bekannt, dass auf die Heizfläche eines Heißfilm-Luftmassensensors auftreffende Wassertropfen insbesondere hochfrequente Signalanteile hervorrufen, die durch den erfindungsgemäß eingesetzten Hochpaß von den niederfrequenten Signalanteilen des Luftmassensensorsignals getrennt werden können. Das erste Hilfssignal ist in diesem Fall ein Maß für die auf dem Luftmassensensor auftreffende Wassermenge und kann als Regelgröße verwendet werden.

Zur Steigerung der Genauigkeit des Verfahrens ist auch bei dieser Variante die Wahl der Grenzfrequenz des Hochpasses dynamisch und in Abhängigkeit von Zustandsgrößen der Brennkraftmaschine durchzuführen, um auszuschließen, dass das erste Hilfssignal auch Signalanteile von einem Nutzsignal des Luftmassensensors enthält.

Eine weitere Ausführungsform des erfindungsgemäßen Verfahrens ist dadurch gekennzeichnet, dass ein zweites Hilfssignal durch Filterung mit einem Tiefpass aus dem Luftmassensensorsignal erhalten wird, und dass die Regelgröße aus dem ersten Hilfssignal, dem zweiten Hilfssignal und Zustandsgrößen der Brennkraftmaschine erhalten wird. Bei dieser Ausführungsform stellt das erste Hilfssignal ein Maß für die auf dem Luftmassensensor auftreffende Wassermenge dar, das zweite Hilfssignal stellt das eigentliche Nutzsignal des Luftmassensensors dar, das die durch den Ansaugtrakt strömende Luftmasse repräsentiert, und aus den Zustandsgrößen der Brennkraftmaschine kann wiederum eine Grenzfrequenz des Tiefpasses/Hochpasses dynamisch gewählt werden.

Es ist denkbar, dass die Grenzfrequenz des Tiefpasses übereinstimmt mit der Grenzfrequenz des Hochpasses. Um eine spektrale Trennung des ersten und des zweiten Hilfssignals voneinander zu erhalten, ist es auch möglich, anstelle des Tiefpasses und des Hochpasses eine Bandsperre einzusetzen, deren untere Grenzfrequenz mit der Grenzfrequenz des Tiefpasses übereinstimmt und deren obere Grenzfrequenz mit der Grenzfrequenz des Hochpasses übereinstimmt.

Eine weitere vorteilhafte Ausführungsform der Erfindung sieht vor, dass die Grenzfrequenz des Hochpasses/Tiefpasses in Abhängigkeit von einem Modell der Brennkraftmaschine gewählt wird. Alternativ ist es auch möglich, dass die obere und die untere Grenzfrequenz der Bandsperre in Abhängigkeit von einem Modell der Brennkraftmaschine gewählt werden.

Eine weitere, ganz besonders vorteilhafte Ausführungsform des erfindungsgemäßen Verfahrens, bei dem zwei Luftmassensensoren so in einem Ansaugrohr der Brennkraftmaschine angeordnet sind, dass in das Ansaugrohr einströmende Luft zuerst den ersten Luftmassensensor und dann den in Strömungsrichtung der angesaugten Luft in einem Abstand entfernt angeordneten zweiten Luftmassensensor erreicht, weist im Rahmen des Vergleichs folgende Schritte auf: Verzögern des Luftmassensensorsignals um eine Verzögerungszeit, um ein verzögertes Luftmassensensorsignal zu erhalten, Subtrahieren des ersten Hilfssignals vom verzögerten Luftmassensensorsignal, um ein Differenzsignal zu erhalten, Integrieren des Differenzsignals, um ein Indikatorsignal zu erhalten, Differenzieren des verzögerten Luftmassensensorsignals, um ein differenziertes Luftmassensensorsignal zu erhalten, Bilden des Betrags des differenzierten Luftmassensensorsignals, um ein positives Luftmassensensorsignal zu erhalten, Differenzieren des ersten Hilfssignals, um ein differenziertes Hilfssignal zu erhalten, Bilden des Betrags des differenzierten. Hilfssignals, um ein positives Hilfssignal zu erhalten, Subtrahieren des positiven Hilfssignals von dem positiven Luftmassensensorsignal, um ein weiteres Differenzsignal zu erhalten.

Das aus dem Differenzsignal erhaltene Indikatorsignal ist ein Maß für die im Ansaugrohr bzw. im Ansaugtrakt enthaltene Wassermenge, und das Vorzeichen des weiteren Differenzsignals sagt aus, welcher der beiden Luftmassensensoren die größere Signaländerung liefert. Erfindungsgemäß wird beim Überschreiten eines vorgebbaren Schwellwerts für das Indikatorsignal, d.h. bei Wassereintrag in den Ansaugtrakt, die Regelgröße aus dem Indikatorsignal und dem Signal desjenigen Luftmassensensors erhalten, bei dem die kleinere Signaländerung festgestellt worden ist. Dieser Mechanismus berücksichtigt die Tatsache, dass hochfrequente Signalanteile im Luftmassensensorsignal höchstwahrscheinlich von auf die Heizfläche eines Luftmassensensors auftreffenden Wassertropfen oder sonstigen Störeinflüssen herrühren, und nicht von üblicherweise niederfrequenten, betriebsgemäßen Änderungen im Luftmassenstrom durch den Ansaugtrakt.

Eine weitere vorteilhafte Ausführungsform des erfindungsgemäßen Verfahrens ist dadurch gekennzeichnet, dass beide Luftmassensensoren nebeneinander angeordnet sind, dass der Verzögerungsschritt entfällt, und dass der zweite Luftmassensensor mit einem Wassertropfenabscheider versehen ist. Besonders vorteilhaft ist bei einer weiteren Verfahrensvariante gemäß der Erfindung, dass ein das dynamische Verhalten des Wassertropfenabscheiders simulierendes Modell bei der Verarbeitung des Luftmassensensorsignals und/oder des ersten Hilfssignals berücksichtigt wird. Das Modell ermöglicht es, das durch den Wassertropfenabscheider veränderte dynamische Verhalten des zweiten Luftmassensensors zu berücksichtigen, um die Vergleichbarkeit der Sensorsignale des ersten Luftmassensensors und des zweiten Luftmassensensors zu gewährleisten.

Eine weitere Ausführungsform des erfindungsgemäßen Verfahrens ist dadurch gekennzeichnet, dass beide Luftmassensensoren in einer gemeinsamen Sensoranordnung, vorzugsweise in einem gemeinsamen Gehäuse, integriert sind.

Eine weitere, besonders vorteilhafte Ausführungsform des erfindungsgemäßen Verfahrens ist dadurch gekennzeichnet, dass der erste Luftmassensensor als Heißfilm-Luftmassensensor ausgebildet ist.

Von besonderer Bedeutung ist die Realisierung des erfindungsgemäßen Verfahrens in der Form eines Computerprogramms, das für ein Steuergerät einer Brennkraftmaschine insbesondere eines Kraftfahrzeugs vorgesehen ist. Das Computerprogramm weist Programmcode auf, der dazu geeignet ist, das erfindungsgemäße Verfahren durchzuführen, wenn er auf einem Computer ausgeführt wird. Weiterhin kann der Programmcode auf einem computerlesbaren Datenträger gespeichert sein, bspw. auf einem sog. Flash-Memory. In diesen Fällen wird also die Erfindung durch das Computerprogramm realsiert, so dass das Computerprogramm in gleicher Weise die Erfindung darstellt wie das Verfahren, zu dessen Ausführung das Programm geeignet ist.

Als weitere Lösung der Aufgabe der vorliegenden Erfindung ist eine Brennkraftmaschine gemäß Anspruch 43 angegeben. Noch eine Lösung der Aufgabe der vorliegenden Erfindung ist durch ein Steuergerät gemäß Anspruch 44 angegeben.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt schematisch einen Signalflußplan, der einer ersten Ausführungsform des erfindungsgemäßen Verfahrens zugrunde liegt,
- Figur la: zeigt ein mit dem Signalflußplan aus Fig. 1 korrespondierendes Ablaufdiagramm,
- Figur 2: zeigt schematisch einen Signalflußplan einer zweiten Ausführungsform der Erfindung,
- Figur 2a: zeigt ein mit dem Signalflußplan aus Fig. 2 korrespondierendes Ablaufdiagramm,
- Figur 3: zeigt einen Signalflußplan einer dritten Ausführungsform des erfindungsgemäßen Verfahrens,
- Figur 4: zeigt schematisch die Anordnung der Heißfilm-Luftmassensensoren HFM_1, HFM_2 im Ansaugrohr 4 sowie den zugehörigen Signalflußplan,
- Figur 4a: zeigt ein Ablaufdiagramm der dritten Ausführungsform des erfindungsgemäßen Verfahrens, und
- Figur 5: zeigt eine erfindungsgemäße Brennkraftmaschine.

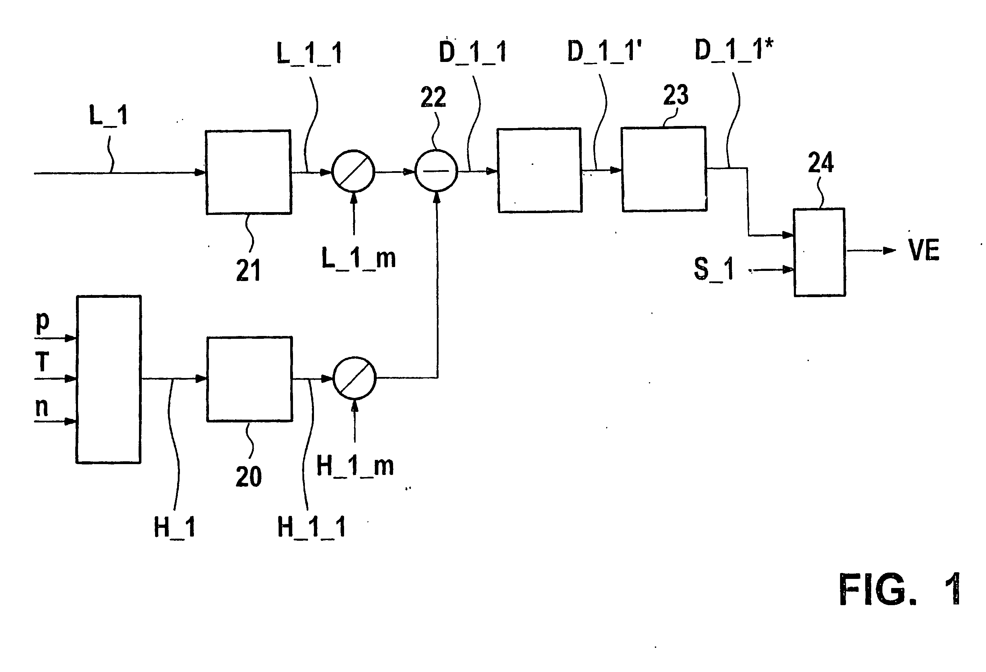

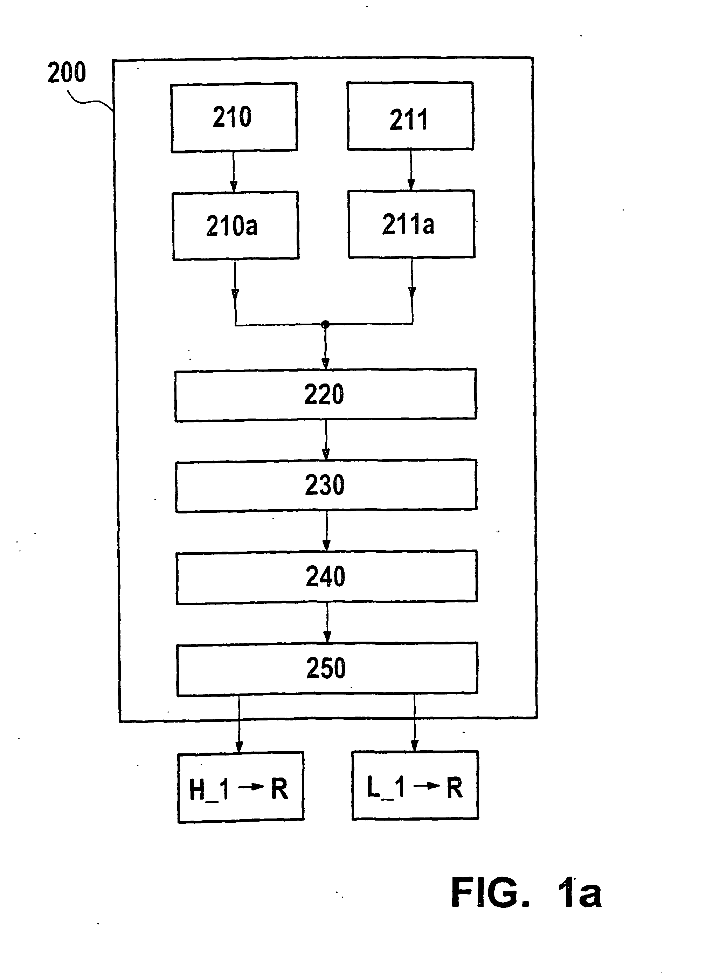

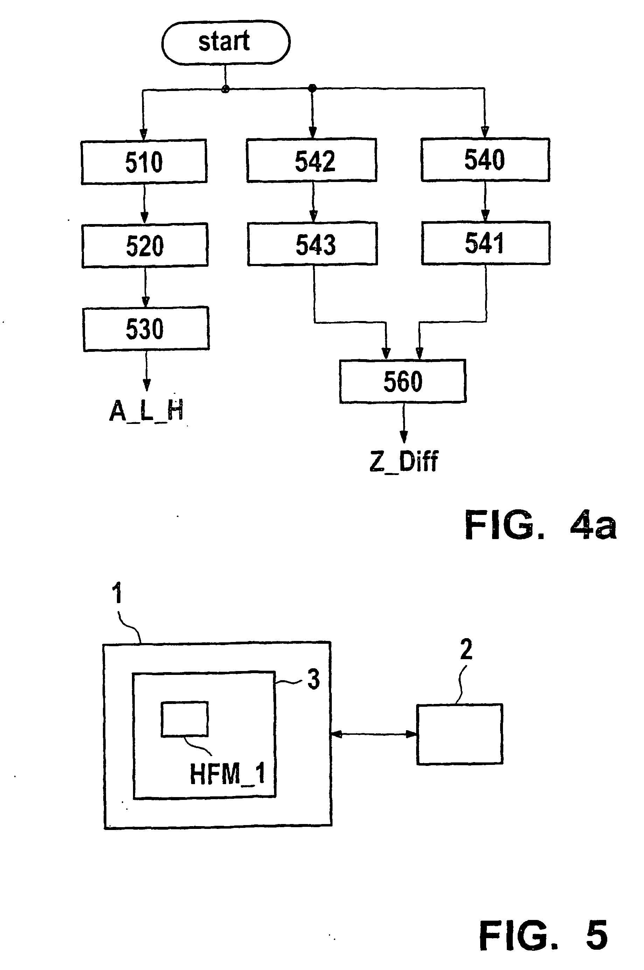

Fig. 1 zeigt einen Signalflußplan einer ersten erfindungsgemäßen Verfahrensvariante, bei der ein erstes Hilfssignal H_1 zusammen mit einem Luftmassensensorsignal L_1 eines ersten Heißfilm-Luftmassensensors HFM_1 (Fig. 5) ausgewertet wird. Der Luftmassensensor HFM_1 ist im Ansaugtrakt 3 einer Brennkraftmaschine 1 (Fig. 5) angeordnet und gibt ein Signal L_1 aus, dessen Wert proportional zu der den Ansaugtrakt durchströmenden Luftmasse ist.

Die Auswertung der Signale L_1, H_1 erlaubt es, den Einfluß einer auf das Luftmassensensorsignal L_1 wirkenden Störgröße auf die von dem Steuergerät 2 durchgeführte Steuerung/Regelung der Brennkraftmaschine 1 zu verringern. Die zeitliche Abfolge der Verfahrensschritte für die Auswertung ist dem Ablaufdiagramm von Figur la zu entnehmen.

Wie aus Fig. 1 ersichtlich, wird das Hilfssignal H_1 aus folgenden Zustandsgrößen der Brennkraftmaschine 1 erhalten: aus dem Druck P der Frischluft außerhalb des Ansaugtraktes 3, aus der Temperatur T der Frischluft und aus der Drehzahl n der Brennkraftmaschine 1, sowie ggf. auch noch aus weiteren Zustandsgrößen (nicht gezeigt) der Brennkraftmaschine 1. Das Hilfssignal H_1 gibt die aus den Zustandsgrößen P, T, n mit Hilfe der allgemeinen Gasgleichung ermittelte Luftmasse an, die die Brennkraftmaschine 1 bei dem Betrieb mit den Zustandsgrößen P, T, n benötigt.

Das erste Hilfssignal H_1 wird dem Differenzierer 20 zugeführt, der in einem Schritt 211 des Ablaufdiagramms aus Figur la aus dem ersten Hilfssignal H_1 ein differenziertes Hilfssignal H_1_1 bildet.

Anschließend wird das differenzierte Hilfssignal H_1_1 auf einen zeitlichen Mittelwert H_1_m des ersten Hilfssignals H_1 normiert, was in dem Schritt 211a aus Fig. 1a erfolgt.

Parallel zu den Schritten 211, 211a wird das Luftmassensensorsignal L_1 des ersten Luftmassensensors HFM_1 (Fig. 5) einem weiteren Differenzierer 21 (Fig. 1) zugeführt, was in Schritt 210 aus Fig. la erfolgt. Der Differenzierer 21 aus Fig. 1 liefert ein differenziertes Luftmassensensorsignal L_1_1, das in einem folgenden Schritt 210a (Fig. 1a) auf einen zeitlichen Mittelwert L_1_m des Luftmassensensorsignals L_1 normiert wird.

Die sich in Schritt 220 anschließende Differenzbildung aus dem differenzierten Luftmassensensorsignal L_1_1 und dem differenzierten Hilfssignal H_1_1 in dem Subtrahierer 22 (Fig. 1) liefert ein Differenzsignal D_1_1. Schließlich wird in Schritt 230 der Betrag des Differenzsignals D_1_1 gebildet, um ein positives Differenzsignal D_1_1' zu erhalten, welches in einem darauf folgenden Schritt 240 von einem Filter 23 gefiltert wird.

Das gefilterte Differenzsignal D_1_1* wird in einem Vergleicher 24 mit einem vorgebbaren Schwellwert S_1 verglichen, um ein Vergleichsergebnis VE zu erhalten. Der Vergleich des gefilterten Differenzsignals D_1_1* mit dem vorgebbaren Schwellwert S_1 erfolgt im Schritt 250 aus Fig. 1a.

Für das aufgrund der Betragsbildung im Schritt 230 stets positive gefilterte Differenzsignal D_1_1* existieren zwei mögliche Vergleichsergebnisse VE bei dem Vergleich 250 mit dem vorgebbaren Schwellwert S_1.

Das Differenzsignal D_1_1 gibt den Unterschied zwischen der zeitlichen Änderung des Luftmassensensorsignals L_1 des Luftmassensensors HFM_1 und der zeitlichen Änderung des ersten Hilfssignals H_1 an. Solange das Differenzsignal D_1_1 einen gewissen Grenzwert nicht überschreitet, wird davon ausgegangen, dass keine Störbeeinflussung des Signals L_1 des Luftmassensensors HFM_1 vorliegt. In diesem Fall wird das Signal L_1 als Regelgröße R erhalten (Fig. 1a).

Sobald jedoch der Grenzwert überschritten wird, wird angenommen, dass eine Störbeeinflussung des Signals L_1 vorliegt, die die Ursache für das abweichende Dynamikverhalten der Signale L_1, H_1 darstellt. Dann wird als Regelgröße R das erste Hilfssignal H_1 erhalten, d.h. das in Fig. 5 abgebildete Steuergerät 2 erhält als Eingangsgröße für die durch den Ansaugtrakt 3 strömende Luftmasse kein Signal L_1 eines externen Sensors, sondern eine im Steuergerät 2 selbst berechnete Größe.

Die Störbeeinflussung kann von Einstreuungen, die sich aufgrund hochfrequenter elektromagnetischer Strahlung im Bereich von Verbindungsleitungen des Luftmassensensors HFM_1 ergeben, herrühren. Eine weitere Ursache ist durch das Auftreffen von Wässertropfen auf die Heizfläche des Luftmassensensors HFM_1 und die damit einhergehende spontane Abkühlung der Heizfläche gegeben.

Das beschriebene Verfahren verhindert Drehzahlschwankungen oder einen plötzlichen Leistungsabfall der Brennkraftmaschine 1 sowie das Überschreiten von Grenzwerten für die Emissionen der Brennkraftmaschine 1, indem bei einer Störung des Luftmassensensorsignals L_1 ersatzweise das Hilfssignal H_1 als Regelgröße R bzw. als Eingangsgröße für das Steuergerät 2 der Brennkraftmaschine 1 verwendet wird.

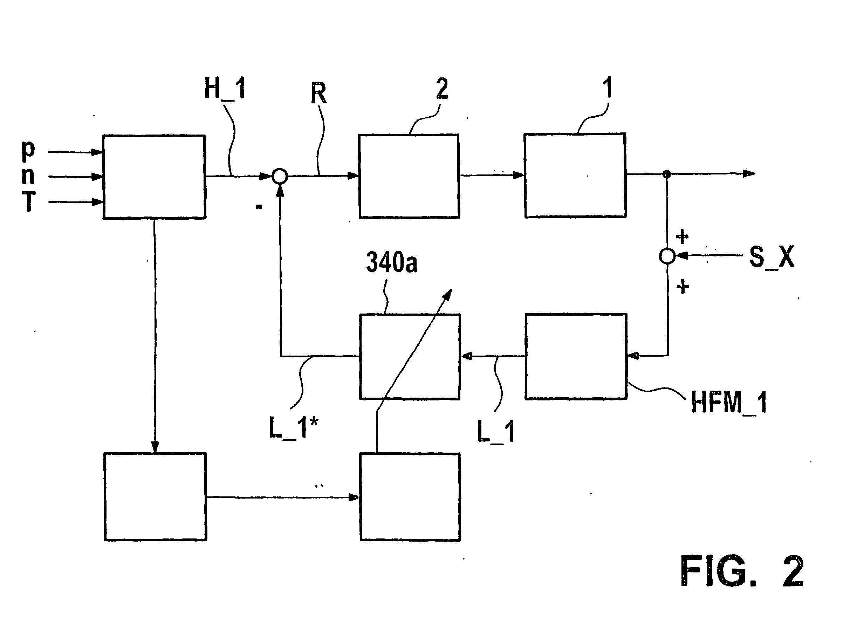

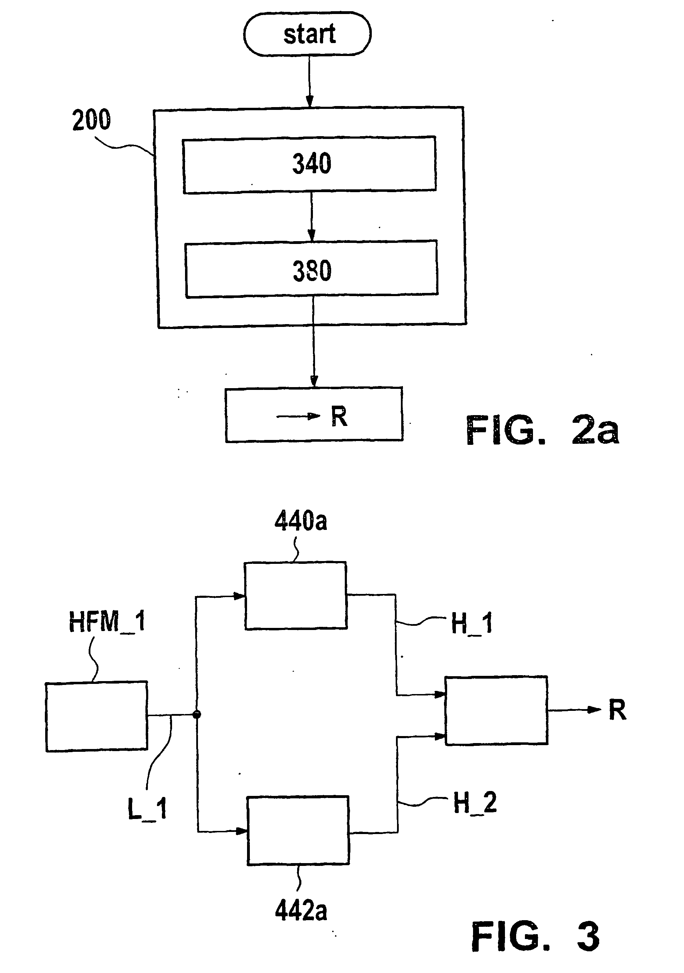

Der Signalflußplan einer zweiten Ausführungsform der Erfindung ist in Fig. 2 dargestellt und zeigt gleichzeitig einen Regelkreis der Brennkraftmaschine 1. Das zugehörige Ablaufdiagramm ist Fig. 2a zu entnehmen.

Wie aus Fig. 2 ersichtlich, liefert der Luftmassensensor HFM_1 ein Luftmassensensorsignal L_1, das aus dem Wert der Luftmasse im Ansaugtrakt 3 der Brennkraftmaschine 1 und einer diesem Wert überlagerten Störgröße S_X erhalten wird.

Wie bereits angesprochen, symbolisiert die Störgröße S_X Signalstörungen des Luftmassensensorsignals L_1, die beispielsweise von auf die Heizfläche des Luftmassensensors HFM_1 auftreffenden Wassertropfen verursacht werden.

Gemäß Fig. 2a wird das Signal L_1 zunächst in einem Schritt 340 von einem Tiefpaß 340a gefiltert, was ein gefiltertes Luftmassensensorsignal L_1* ergibt. Das gefilterte Luftmassensensorsignal L_1* wird anschließend von einem Hilfssignal H_1 in einem Schritt 380 subtrahiert.

Wie im vorigen Beispiel wird das Hilfssignal H_1 rechnerisch aus Zustandsgrößen P, T, n der Brennkraftmaschine 1 erhalten. Die Differenzbildung 380 liefert die Regelgröße R, die dem Steuergerät 2 als Eingangsgröße zugeführt wird und die Regelung der Brennkraftmaschine 1 beeinflußt.

Die Regelgröße R wirkt beispielsweise auf einen Regelkreis für die Abgasrückführung. Dadurch kann das der Brennkraftmaschine 1 zugeführte Luft-Kraftstoff-Gemisch auf den optimalen Wert eingestellt werden.

Im Idealzustand nimmt die Regelgröße R den Wert Null an, d.h. die vom Luftmassensensor HFM_1 erfaßte Luftmasse ist genauso groß wie die rechnerisch ermittelte Luftmasse des Hilfssignals H_1. Sobald die Störgröße S_X einen von Null verschiedenen Wert annimmt, z.B. bei Wassereintrag in den Ansaugtrakt, ergibt sich auch für die Regelgröße R ein Wert ungleich Null.

Um zu verhindern, dass die Störgröße S_X die Regelung der Abgasrückführung beeinflußt, wird das Luftmassensensorsignal L_1 durch den Tiefpaß 340a gefiltert. Davon ausgehend, dass die Störgröße S_X im Vergleich zu der zu messenden Luftmasse üblicherweise, besonders aber bei Wassereintrag in den Ansaugtrakt 3, hochfrequente Signalanteile liefert, wird die Grenzfrequenz des Tiefpasses 340a so gewählt, dass gerade alle niederfrequenten Signalanteile des Luftmassensensorsignals L_1 durchgelassen und damit bei der Ermittlung der Regelgröße R miteinbezogen werden. Hochfrequente, auf die Störgröße zurückzuführende Signalanteile, werden von dem Tiefpaß 340a nicht durchgelassen und können somit die Bildung der Regelgröße R nicht beeinflussen.

Besonders vorteilhaft ist es, die Grenzfrequenz dynamisch, d.h. während des Betriebs der Brennkraftmaschine 1, zu wählen, und zwar in Abhängigkeit eines sog. Streckenmodells der Brennkraftmaschine 1. Das Streckenmodell liefert in Abhängigkeit der Zustandsgrößen P, T, n, .... Informationen über das Spektrum des Luftmassensensorsignals L_1. Diese Informationen umfassen auch die höchste zu erwartende Signalfrequenz des Signals L_1. Mit diesen Informationen ist es möglich, nur denjenigen Teil des Spektrums des Signals L_1 in die Bildung der Regelgröße R miteinzubeziehen, der die tatsächlich erfaßte Luftmasse angibt.

In Figur 3 ist der Signalflußplan einer Erfindungsvariante angegeben, die sowohl einen Hochpaß 440a als auch einen Tiefpaß 442a aufweist.

Ausgehend von dem Luftmassensensorsignal L_1 des Luftmassensensors HFM_1 wird das erste Hilfssignal H_1 aus Hochpaßfilterung des Signals L_1 mit dem Hochpaß 440a erhalten. Das zweite Hilssignal H_2 wird aus Tiefpaßfilterung des Signals L_1 mit dem Tiefpaß 442a erhalten.

Die Regelgröße R wird dabei aus beiden Hilfssignalen H_1, H_2 und, analog zu den vorigen Beispielen, aus Zustandsgrößen (nicht in Fig. 3 dargestellt) der Brennkraftmaschine 1 (vgl. Fig. 5) erhalten.

Bei äieser Variante wird die im Ansaugtrakt 3 der Brennkraftmaschine 1 befindliche Wassermenge durch das Hilfssignal H_1 repräsentiert, das aufgrund der Hochpaßfilterung nur die von auf die Heizfläche des Sensors HFM_1 treffenden Wassertropfen herrührenden Signalanteile erhält.

Die niederfrequenten Signalanteile des Luftmassensensorsignals L_1, die den tatsächlichen Luftmassenstrom angeben, bilden das zweite Hilfssignal H_2.

Die Grenzfrequenzen der Filter 440a, 442a werden in Abhängigkeit eines Modells der Brennkraftmaschine 1 gewählt und dynamisch an den jeweiligen Betriebszustand angepasst.

Unter Kenntnis der Wassermenge im Ansaugtrakt 3 aus dem ersten Hilfssignal H_1, der tatsächlichen Luftmasse aus dem zweiten Hilfssignal H_2, sowie aus Zustandsgrößen der Brennkraftmaschine 1 und ggf. weiteren Parametern der Verbrennung kann die in den Brennräumen der Brennkraftmaschine 1 tatsächlich zur Verfügung stehende Luftmasse berechnet werden.

Damit ist es auch bei in flüssiger Phase vorliegendem Wasser im Ansaugtrakt 3 der Brennkraftmaschine 1 möglich, die Brennkraftmaschine 1 im optimalen Betriebspunkt zu betreiben.

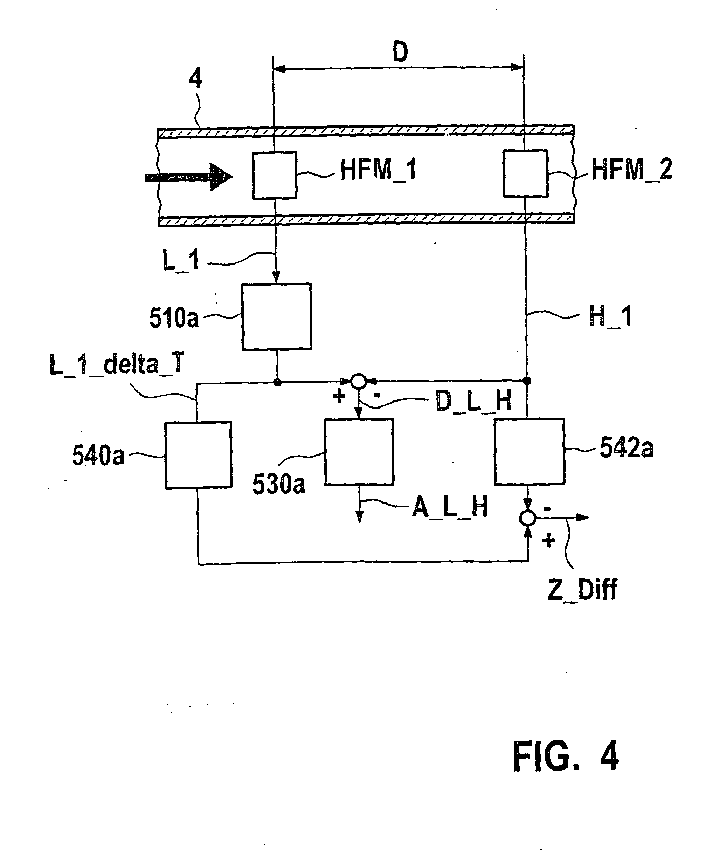

Eine weitere Ausführungsform der vorliegenden Erfindung ist in Figur 4 abgebildet. In dem Ansaugrohr 4 sind zwei Heißfilm-Luftmassensensoren HFM_1, HFM_2 in einem Abstand D voneinander angeordnet. Der Pfeil symbolisiert die Strömungsrichtung der in das Ansaugrohr 4 strömenden Luft.

Wie aus Fig. 4 ersichtlich, wird zuerst der erste Luftmassensensor HFM_1 von einem einströmenden Luftvolumen umgeben, und nach einer vom Abstand D abhängigen Laufzeit wird auch der zweite Heißfilm-Luftmassensensor HFM_2 von dem einströmenden Luftvolumen umgeben.

Der erste Sensor HFM_1 liefert das Luftmassensensorsignal L_1, und der zweite Sensor HFM_2 liefert das erste Hilfssignal H_1. Um den durch den Abstand D hervorgerufenen Laufzeitunterschied zwischen dem Luftmassensensorsignal L_1 und dem ersten Hilfssignal H_1 auszugleichen, ist das Zeitglied 510a vorgesehen. Es verzögert (vgl. Ablaufdiagramm Fig. 4a) das Luftmassensensorsignal L_1 um die Zeit, die ein in das Ansaugrohr 4 einströmendes Luftvolumen benötigt, um von dem ersten Sensor HFM_1 zu dem zweiten Sensor HFM_2 zu gelangen, und liefert das verzögerte Luftmassensensorsignal L_1_delta_T, welches anschließend in dem Differenzierer 540a differenziert wird, um ein differenziertes Luftmassensensorsignal L_1_delta_T_1 zu erhalten. Die Verzögerungszeit des Zeitglieds 510a ist einstellbar und wird so gewählt, dass die Differenz aus den Signalen L_1_delta_T und H_1 bei Abwesenheit von Wasser im Ansaugrohr 4 Null ist.

Das vom zweiten Sensor HFM_2 gelieferte erste Hilfssignal H_1 wird in dem Differenzierer 542a differenziert, um ein differenziertes Hilfssignal H1_1 zu erhalten. Beide Differenzierer 540a, 542a führen auch eine Betragsbildung durch, so dass am jeweiligen Ausgang ein positives Luftmassensensorsignal L_1_delta_T_1' bzw. ein positives Hilfssignal H1_1' vorliegt.

Schließlich wird das positive Hilfssignal H1_1' von dem positiven Luftmassensensorsignal L_1_delta_T_1' subtrahiert, um ein weiteres Differenzsignal Z_Diff zu erhalten.

Darüberhinaus wird das erste Hilfssignal H_1 von dem verzögerten Luftmassensensorsignal L_1_delta_T subtrahiert, und das resultierende Differenzsignal D_L_H wird in dem Integrierer 530a integriert, um ein Indikatorsignal A_L_H zu erhalten.

Das Indikatorsignal ist ein Maß für die Abweichung der von den Sensoren HFM_1, HFM_2 gemessenen Signale; aus dieser Abweichung kann auf die in das Ansaugrohr 4 eingetragene Wassermenge geschlossen werden. Das Differenzsignal Z_Diff gibt an, welcher der beiden Sensoren HFM_1, HFM_2 eine größere Signaländerung erfaßt.

Sobald das Indikatorsignal A_L_H einen vorgebbaren Schwellwert überschreitet, wird die Regelgröße R (nicht in Fig. 4 dargestellt) entweder aus dem Luftmassensensorsignal L_1 oder aus dem ersten Hilfssignal H_1 erhalten.

Um einen möglichst zuverlässigen Wert für die gemessene Luftmasse zur Bildung der Regelgröße R zu erhalten, wird in diesem Fall dasjenige Sensorsignal zur Bildung der Regelgröße R verwendet, dessen Signaländerung kleiner ist.

Wenn das Differenzsignal Z_Diff > 0, so ist die Signaländerung des Luftmassensensorsignals L_1 größer als die Signaländerung des ersten Hilfssignals H_1; dann wird das Luftmassensensorsignal L_1 ignoriert und die Regelgröße R wird aus dem ersten Hilfssignal H_1 gebildet. Analog wird bei negativem Differenzsignal Z_Diff die Regelgröße R aus dem Luftmassensensorsignal L_1 gebildet.

Mit Hilfe des Indikatorsignals A_L_H, aus dem auf die eingetragene Wassermenge geschlossen werden kann, und unter Verwendung des jeweils nicht ignorierten Sensorsignals als Maß für die tatsächliche Luftmenge im Ansaugtrakt 3 kann die Regelgröße R gebildet werden, um die korrekte Menge des einzuspritzenden Kraftstoffs in Abhängigkeit der tatsächlich im Brennraum zur Verfügung stehenden Luftmasse zu berechnen.

Die beiden Luftmassensensoren HFM_1, HFM_2 können im Ansaugrohr 4 auch nebeneinander angeordnet sein, wobei der zweite Luftmassensensor HFM_2 mit einem Wasserabscheider (nicht gezeigt) versehen ist. Da der Wasserabscheider das dynamische Verhalten des zweiten Luftmassensensors HFM_2 ändert, muss ein Modell des dynamischen Verhaltens des Wassertropfenabscheiders dem ersten Luftmassensensor HFM_1 nachgeschaltet werden, um die Vergleichbarkeit beider Sensorsignale zu gewährleisten.

Bei dieser Variante liefert eine Abweichung der Sensorsignale der beiden Luftmassensensoren HFM_1, HFM_2 ein Maß für die in das Ansaugrohr 4 eingetragene Wassermenge. Vorzugsweise sind beide Luftmassensensoren HFM_1, HFM_2 in demselben Gehäuse angeordnet.

## Patentansprüche

1. Verfahren zum Betreiben einer Brennkraftmaschine (1) insbesondere eines Kraftfabrzeugs, mit einem Steuergerät (2) zur Steuerung/Regelung der Brennkraftmaschine (1) in Abhängigkeit eines Luftmassensensorsignals (L_1), wobei mindestens ein erstes Hilfssignal (H_1) verwendet wird und wobei das erste Hilfssignal (H_1) oder ein daraus abgeleitetes Signal mit dem Luftmassensensorsignal (L_1) oder einem daraus abgeleiteten Signal verglichen wird (220), um ein Differenzsignal (D_1_1) zu erhalten, **dadurch gekennzeichnet,**
- **dass** aus dem Differenzsignal (D_1_1) durch Bilden des Betrags (230) ein positives Differenzsignal erhalten wird
- und **dass** durch Filtern des positiven Differenzsignals (D_1_1') ein gefiltertes Differenzsignal (D_1_1*) erhalten wird,
- **dass** das Luftmassensensorsignal (L_1) als Regelgröße (R) dient, wenn das positive Differenzsignal (D_1_1') oder das gefilterte Differenzsignal (D_1_1*) einen vorgebaren Schwellwert S_1 unterschreitet,
- und **dass** das Hilfssignal (H_1) als Regelgröße (R) dient,
- wenn das positive Differenzsignal (D_1_1') oder das gefilterte Differenzsignal (D_1_1*) einen vorgebaren Schwellwert S_1 überschreitet.

2. Verfahren nach Anspruch 1, **dadurch gekennzeichnet, dass** das Differenzsignid (D_1_1) durch die folgenden Schritten gebildet wird:
- Differenzieren des Luftmassensensorsignals (L_1) und des ersten Hilfssignals (H_1) (210,211) um eine differenziertes Luftmassensensorsignals (L_1_1) und eine differenziertes Hilfssignal (H_1_1) zu erhalten,
- Bilden der Differenz (220) aus diesen differenzierten Signalen (L_1_1, H_1_1), um ein Differenzsignal (D_1_1) zu erhalten

3. Verfahren nach Anspruch 2 **gekennzeichnet durch** folgende Schritte:
Normieren (210a) des differenzierten Luftmassensensorsignals (L_1_1) auf einen zeitlichen Mittelwert (L_1_m) des Luftmassensensorsignals (L_1), und Normieren (211a) des differenzierten Hilfssignals (H_1_1) auf einen zeitlichen Mittelwert (H_1m) des ersten Hilfssignals (H_1)

4. Verfahren nach einem der vorhergehenden Ansprüche, **dadurch gekennzeichnet, dass** das erste Hilfssignal aus mindestens einer der folgenden Methoden erhalten wird:
- Zustandsgrößen der Brennkraftmaschine
- Streckenmodell einer Brennkraftmaschine
- Signal einer Abgassonde
- ein zweiter Luftmassensensor (HFM _2)
- ein Regensensor
- ein Ultraschallsensor
- ein Hitzdraht-Luftmassensensor
- ein kapazitiver Sensor
- ein ohmscher Sensor

5. Verfahren nach Anspruch 1, **dadurch gekennzeichnet, dass** ein Vergleich (200) des ersten Hilfssignals (H_1) oder eines aus dem ersten Hilfssignal (H_1) abgeleiteten Signals mit dem Luftmassensensorsignal (L_1) oder einem aus dem Luftmassensensorsignal (L_1) abgeleiteten Signal durchgeführt wird, wobei ein Vergleichsergebnis (VE) erhalten wird.

6. Verfahren nach Anspruch 5, **dadurch gekennzeichnet, dass** in Abhängigkeit von dem Vergleichsergebnis (VE) eine Regelgröße (R) für die Steuerung der Brennkraftmaschine (1) erhalten wird.

7. Verfahren nach Anspruch 4, **dadurch gekennzeichnet, dass** das erste Hilfssignal (H_1) aus einem Signal eines kapazitiven Sensors erhalten wird, wobei der kapazitive Sensor als integraler Bestandteil des ersten Luftmassensensors (HFM_1) ausgebildet ist.

8. Verfahren nach Ansprueb 4, **dadurch gekennzeichnet, dass** der kapazitive Sensor als Plattenkondensator mit einer ersten und einer zweiten Kondensatorplatte ausgebildet ist, wobei die erste Kondensatorplatte durch eine Oberfläche des ersten Luftmassensensors (HFM_1) gebildet wird.

9. Verfahren nach Anspruch 4, **dadurch gekennzeichnet, dass** der ohmsche Sensor mindestens zwei, vorzugsweise aus korrosionsbeständigem Material bestehende Elektroden aufweist.

10. Verfahren nach Anspruch 4 oder 9, **dadurch gekennzeichnet, dass** der ohmsche Sensor auf einer Oberfläche des ersten Luftmassensensors (HFM_1) angeordnet ist.

11. Verfahren nach Anspruch 1, **dadurch gekennzeichnet, dass** der Vergleich (200) folgende Schritte umfasst: Differenzbildung (380) aus dem ersten Hilfssignal (H_1) und dem Luftmassensensorsignal (L_1), um die Regelgröße (R) zu erhalten.

12. Verfahren nach Anspruch 11, durch folgenden Schritt **gekennzeichnet**: Filterung (340) des Luftmassensensorsignals (L_1) vor der Differenzbildung (380), um ein gefiltertes Luftmassensensorsignal (L_1*) zu erhalten.

13. Verfahren nach Anspruch 12, **dadurch** gekminzeichnet, dass zur Fi!terung (340) ein Tiefpass (340a) verwendet wird.

14. Verfahren nach Anspruch 13, **dadurch gekennzeichnet, dass** die Grenzfrequenz des Tiefpasses (340a) dynamisch und in Abhängigkeit von Zustandsgrößen der Brennkraftmaschine (1) gewählt wird.

15. Verfahren nach Anspruch 14, **dadurch gekennzeichnet dass** die Grenzfrequenz des Tiefpasses (340a) in Abhängigkeit von einem Modell der Brennkraftmaschine gewählt wird.

16. Verfahren nach Anspruch 1, **dadurch gekennzeichnet, dass** das erste Hilfssignal (H_1) durch Filterung (440) mit einem Hochpass (440a) aus dem Luftmassensensorsignal (L_1) erhalten wird und als eine Regelgröße (R) zur Steuerung der Brennkraftmaschine (1) verwendet wird.

17. Verfahren nach Anspruch 16, **dadurch gekennzeichnet, dass** die Grenzfrequenz des Hochpasses (440a) dynamisch gewählt wird.

18. Verfahren nach Anspruch 17, **dadurch gekennzeichnet, dass** die Grenzfrequenz des Hochpasses (440a) in Abhängigkeit von Zustandsgrößen der Brennkraftmaschine (1) gewählt wird.

19. Verfahren nach einem der Ansprüche 16 bis 18, **dadurch gekennzeichnet dass** ein zweites Hilfssignal (H_2) durch Filterung (442) mit einem Tiefpass (442a) aus dem Luftmassensensorsignal (L_1) erhalten wird, und dass die Regelgröße (R) aus dem ersten Hilfssignal (H_1), dem zweiten Hilfssignal (H_2) und Zustandsgrößen der Brennkraftmaschine (1) erhalten wird.

20. Verfahren nach Anspruch 19, **dadurch gekennzeichnet, dass** die Grenzfrequenz des Tiefpasses (442a) dynamisch gewählt wird.

21. Verfahren nach Anspruch 20, **dadurch gekennzeichnet, dass** die Grenzfrequenz des Tiefpasses (442a) in Abhängigkeit von Zustandsgrößen der Brennkraftmaschine (1) gewählt wird.

22. Verfahren nach Anspruch 18 oder 21, **dadurch gekennzeichnet, dass** die Grenzfrequenz des Hochpasses (440a) / Tiefpasses (442a) in Abhängigkeit von einem Modell der Brennkraftmaschine (1) gewählt wird.

23. Verfahren nach Anspruch 4, wobei beide Luftmassensensoren (HFM_1, HFM_2) so in einem Ansaugrohr (4) der Brennkraftmaschine (1) angeordnet sind, dass in das Ansaugrohr (4) einströmende Luft zuerst den ersten Luftmassensensor (HFM_1) und dann den in Strömungsrichtung der angesaugten Luft in einem Abstand (D) entfernt angeordneten zweiten Luftmassensensor (HFM_2) erreicht, und wobei der Vergleich (200) folgende Schritte umfasst: Verzögern (510) des Luftmassensensorsignals (L_1) um eine Verzögerungszeit (delta_T), um ein verzögertes Luftmassensensorsignal (L_1_delta_T) zu erhalten, Subtrahieren (520) des ersten Hilfssignals (H_1) vom verzogetten Luftmassensensorsignal (L_1_delta_T), um ein Differenzsignal (D_L_H) zu erhalten, Integrieren (530) des Differenzsignals (D_L_H), um ein Indikatorsignal (A_L_H) zu erhalten, Differenzieren (540) des verzögerten Luftmassensensorsignals (L _1_delta_T) um ein differenziertes Luftmassensensorsignal (L_1_delta_T_1) zu erhalten, Bilden (541) des Betrags des differenzierten Luftmassensensorsignals (L 1_delta_T_1), um ein positives Luftmassensensorsignal (L_1_delta_T_1') zu erhalten, Differenzieren (542) des ersten Hilfssignals (H_1) um ein differenziertes Hilfssignal (H1_1) zu erhalten, Bilden (543) des Betrags des differenzierten Hilfssignals (H1_1), um ein positives Hilfssignal (H1_1') zu erhalten, Subtrahieren (560) des positiven Hilfssignals (H1_1') von dem positiven Luftmassensensorsignal (L_1_delta_T_1'), um ein weiteres Differenzsignal (Z_Diff) zu erhalten.

24. Verfahren nach Anspruch 23, **gekennzeichnet durch** folgende Schritte: Vergleichen (570) des Indikatorsignals (A_L_H) mit mindestens einem Schwellwert, falls das Indikatorsignal (A_L_H) einen Schwellwert übersteigt: Erhalten (580) der Regelgröße (R) aus dem ersten Hilfssignal (H_1) und dem Indikatorsignal (A_L_H), wenn das Differenzsignal (Z_Diff) positiv ist, Erhalten (581) der Regelgröße (R) aus dem Luftmassensensorsignal (L_1) und dem Indikatorsignal (A_L_H), wenn das Differenzsignal (Z_Diff) negativ ist.

25. Verfahren nach Anspruch 23 oder 24, **dadurch gekennzeichnet, dass** beide Luftmassensensoren (HFM_1, HFM_2) nebeneinander angeordnet sind, dass der Verzögerungsschritt (510) entfällt, und dass der zweite Luftmassensensor (HFM_2) mit einem Wassertropfenabscheider versehen ist.

26. Verfahren nach Anspruch 25, **dadurch gekennzeichnet, dass** ein das dynamische Verhalten des Wassenropfenabscheiders simulierendes Modell bei der Verarbeitung des Luftmsassensensorsignals (L_1) und / oder des ersten Hilfssignals (H_1) berücksichtigt wird.

27. Verfahren nach einem der Ansprüche 23 bis 26, **dadurch gekennzeichnet, dass** beide Luftmassensensoren (HFM_1, HFM_2) in einer gemeinsamen Sensoranordnung, vorzugsweise in einem gemeinsamen Gehäuse, integriert sind.

28. Verfahren nach einem der vorhergehenden Ansprüchen, **dadurch gekennzeichnet, dass** zur Steuerung/Regelung der Brennkraftmaschine (1) in Abhängigkeit eines Luftmassensensorsignals (L_1) eines ersten Luftmassensensors (HFM_1) mindestens ein erstes Hilfssignal (H_1) verwendet wird, und dass in Abhängigkeit von dem ersten Hilfssignal der Einfluss einer das Luftmassensensorsignal (L_1) beeinflussenden Störgröße (S_X) auf die Regelung der Brennkraftmaschine (1) verringert wird.

29. Verfahren nach einem der Ansprüche 4 oder 28, **gekennzeichnet durch** folgende Schritte: Ableiten der Störgröße (S_X) aus dem ersten Hilfssignal (H_1), Erhalten der Regelgröße (R) in Abhängigkeit von der Störgröße (S_X).

30. Verfahren nach einem der vorstehenden Ansprüche, **dadurch gekennzeichnet, dass** der erste Luftmassensensor (HFM_1) als Heißfilm-Luftmassensensor ausgebildet ist.

31. Computerprogramm für ein Steuergerät einer Brennkraftmaschine insbesondere eines Kraftfahrzeugs mit Programmcode, zur Durchführung des Verfahren nach einem der Ansprüche 1 - 30, wenn er auf einem Computer oder Steuergerät ausgeführt wird.

32. Steuergerät (2) für eine Brennkraftmaschine (1) insbesondere eines Kraftfahrzeugs, zur Steuerung/Regelung der Brennkraftmaschine (1) in Abhängigkeit eines Luftmassensensorsignals (L_1) eines ersten Luftmassensensors (HFM_1), wobei mindestens ein erstes Hilfssignal (H_1) verwendet wird und wobei das erste Hilfssignal (H_1) oder ein daraus abgeleitetes Signal mit dem Luftmassensensorsignal (L_1) oder einem daraus abgeleiteten Signal verglichen wird (220), um ein Differenzsignal (D_1_1) zu erhalten, **dadurch gekennzeichnet,**
- **dass** aus dem Differenzsignal (D_1_1) durch Bilden des Betrags (230) ein positives Differenzsignal erhalten wird
- und **dass** durch Filtern des positiven Differenzsignals (D_1_1') ein gefiltertes Differenzsignal (D_1_1*) erhalten wird,
- **dass** das Luftmassensensorsignal (L_1) als Regelgröße (R) dient, wenn das positive Differenzsignal (D_1_1') oder das gefilterte Differenzsignal (D_1_1*) einen vorgebaren Schwellwert S_1 unterschreitet,
- und **dass** das Hilfssignal (H_1) als Regelgröße (R) dient, wenn das positive Differenzsignal (D_1_1') oder das gefilterte Differenzsignal (D_1_1*) einen vorgebaren Schwellwert S_1 überschreitet.

## Claims

1. Method for operating an internal combustion engine (1), in particular of a motor vehicle, having a control device (2) for performing open-loop/closed-loop control of the internal combustion engine (1) as a function of an air mass flow rate sensor signal (L_1), wherein at least one first auxiliary signal (H_1) is used, and wherein the first auxiliary signal (H_1) or a signal which is derived therefrom is compared (220) with the air mass flow rate sensor signal (L_1) or a signal which is derived therefrom in order to acquire a difference signal (D_1_1), **characterized**
- **in that** a positive difference signal is acquired from the difference signal (D_1_1) by forming the absolute value (230),
- and **in that** a filtered difference signal (D_1_1*) is acquired by filtering the positive difference signal (D_1_1'),
- **in that** the air mass flow rate sensor signal (L_1) serves as a closed-loop controlled variable (R) if the positive difference signal (D_1_1') or the filtered difference signal (D_1_1*) drops below a predefinable threshold value S_1,
- and **in that** the auxiliary signal (H_1) serves as a closed-loop controlled variable (R),
- if the positive difference signal (D_1_1') or the filtered difference signal (D_1_1*) exceeds a predefinable threshold value S_1.

2. Method according to Claim 1, **characterized in that** the difference signal (D_1_1) is formed by means of the following steps:
- differentiation of the air mass flow rate sensor signal (L_1) and of the first auxiliary signal (H_1) (210, 211) in order to acquire a differentiated air mass flow rate sensor signal (L_1_1) and a differentiated auxiliary signal (H_1_1),
- formation of the difference (220) from these differentiated signals (L_1_1, H_1_1) in order to acquire a difference signal (D_1_1).

3. Method according to Claim 2, **characterized by** the following steps:
Standardization (210a) of the differentiated air mass flow rate sensor signal (L_1_1) to a chronological mean value (L_1_m) of the air mass flow rate sensor signal (L_1), and standardization (211a) of the differentiated auxiliary signal (H_1_1) to a chronological mean value (H_1m) of the first auxiliary signal (H_1).

4. Method according to one of the preceding claims, **characterized in that** the first auxiliary signal is acquired from at least one of the following methods:
- state variables of the internal combustion engine
- linear path model of an internal combustion engine
- signal of an exhaust gas probe
- a second air mass flow rate sensor (HFM_2)
- a rain sensor
- an ultrasonic sensor
- a hot wire air mass flow rate sensor
- a capacitive sensor
- an ohmic sensor.

5. Method according to Claim 1, **characterized in that** a comparison (200) is made between the first auxiliary signal (H_1) or a signal derived from the first auxiliary signal (H_1) and the air mass flow rate sensor signal (L_1) or a signal which is derived from the air mass flow rate sensor signal (L_1), wherein a comparison result (VE) is acquired.

6. Method according to Claim 5, **characterized in that** a closed-loop controlled variable (R) for controlling the internal combustion engine (1) is acquired as a function of the comparison result (VE).

7. Method according to Claim 4, **characterized in that** the first auxiliary signal (H_1) is acquired from a signal of a capacitive sensor, wherein the capacitive sensor is embodied as an integral component of the first air mass flow rate sensor (HFM_1).

8. Method according to Claim 4, **characterized in that** the capacitive sensor is embodied as a plate capacitor having a first and a second capacitor plate, wherein the first capacitor plate is formed by a surface of the first air mass flow rate sensor (HFM_1).

9. Method according to Claim 4, **characterized in that** the ohmic sensor has at least two electrodes which are preferably composed of corrosion-proof material.

10. Method according to Claim 4 or 9, **characterized in that** the ohmic sensor is arranged on a surface of the first air mass flow rate sensor (HFM_1).

11. Method according to Claim 1, **characterized in that** the comparison (200) comprises the following steps: formation of the difference (380) from the first auxiliary signal (H_1) and the air mass flow rate sensor signal (L_1) in order to acquire the closed-loop controlled variable (R).

12. Method according to Claim 11, **characterized by** the following step: filtering (340) of the air mass flow rate sensor signal (L_1) prior to the formation of the difference (380) in order to acquire a filtered air mass flow rate sensor signal (L_1*).

13. Method according to Claim 12, **characterized in that** a low-pass filter (340a) is used for filtering (340).

14. Method according to Claim 13, **characterized in that** the limiting frequency of the low-pass filter (340a) is selected dynamically and as a function of state variables of the internal combustion engine (1).

15. Method according to Claim 14, **characterized in that** the limiting frequency of the low-pass filter (340a) is selected as a function of a model of the internal combustion engine.

16. Method according to Claim 1, **characterized in that** the first auxiliary signal (H_1) is acquired from the air mass flow rate sensor signal (L_1) by filtering (440) with a high-pass filter (440a) and is used as a closed-loop controlled variable (R) for controlling the internal combustion engine (1).

17. Method according to Claim 16, **characterized in that** the limiting frequency of the high-pass filter (440a) is selected dynamically.

18. Method according to Claim 17, **characterized in that** the limiting frequency of the high-pass filter (440a) is selected as a function of state variables of the internal combustion engine (1).

19. Method according to one of Claims 16 to 18, **characterized in that** a second auxiliary signal (H_2) is acquired from the air mass flow rate sensor signal (L_1) by filtering (442) with a low-pass filter (442a), and **in that** the closed-loop controlled variable (R) is acquired from the first auxiliary signal (H_1), the second auxiliary signal (H_2) and state variables of the internal combustion engine (1).

20. Method according to Claim 19, **characterized in that** the limiting frequency of the low-pass filter (442a) is selected dynamically.

21. Method according to Claim 20, **characterized in that** the limiting frequency of the low-pass filter (442a) is selected as a function of state variables of the internal combustion engine (1).

22. Method according to Claim 18 or 21, **characterized in that** the limiting frequency of the high-pass filter (440a)/low-pass filter (442a) is selected as a function of a model of the internal combustion engine (1).

23. Method according to Claim 4, wherein both air mass flow rate sensors (HFM_1, HFM_2) are arranged in an intake manifold (4) of the internal combustion engine (1) in such a way that air flowing into the intake manifold (4) firstly reaches the first air mass flow rate sensor (HFM_1) and then the second air mass flow rate sensor (HFM_2) which is arranged at a distance (D) in the direction of flow of the sucked-in air and wherein the comparison (200) comprises the following steps: delaying (510) of the air mass flow rate sensor signal (L_1) by a delay time (delta_T) in order to acquire a delayed air mass flow rate sensor signal (L_1_delta_T), subtraction (520) of the first auxiliary signal (H_1) from the delayed air mass flow rate sensor signal (L_1_delta_T), in order to acquire a difference signal (D_L_H), integration (530) of the difference signal (D_L_H) in order to acquire an indicator signal (A_L_H), differentiation (540) of the delayed air mass flow rate sensor signal (L_1_delta_T) in order to acquire a differentiated air mass flow rate sensor signal (L_1_delta_T_1), formation (541) of the absolute value of the differentiated air mass flow rate sensor signal (L_1_delta_T_1) in order to acquire a positive air mass flow rate sensor signal (L_1 delta T_1'), differentiation (542) of the first auxiliary signal (H_1) in order to acquire a differentiated auxiliary signal (H1_1), formation (543) of the absolute value of the differentiated auxiliary signal (H1_1) in order to acquire a positive auxiliary signal (H1_1'), subtraction (560) of the positive auxiliary signal (H1_1') from the positive air mass flow rate sensor signal (L_1_delta_T_1') in order to acquire a further difference signal (Z_Diff).

24. Method according to Claim 23, **characterized by** the following steps: comparison (570) of the indicator signal (A_L_H) with at least one threshold value if the indicator signal (A_L_H) exceeds a threshold value; acquisition (580) of the closed-loop controlled variable (R) from the first auxiliary signal (H_1) and the indicator signal (A_L_H) if the difference signal (Z_Diff) is positive, acquisition (581) of the closed-loop controlled variable (R) from the air mass flow rate sensor signal (L_1) and the indicator signal (A_L_H) if the difference signal (Z_Diff) is negative.

25. Method according to Claim 23 or 24, **characterized in that** both air mass flow rate sensors (HFM_1, HFM_2) are arranged next to one another, **in that** the delaying step (510) is eliminated, and **in that** the second air mass flow rate sensor (HFM_2) is provided with a water droplet separator.

26. Method according to Claim 25, **characterized in that** a model which simulates the dynamic behaviour of the water droplet separator is taken into account in the processing of the air mass flow rate sensor signal (L_1) and/or of the first auxiliary signal (H_1).

27. Method according to one of Claims 23 to 26, **characterized in that** both air mass flow rate sensors (HFM_1, HFM_2) are integrated in a common sensor arrangement, preferably in a common housing.

28. Method according to one of the preceding claims, **characterized in that** at least one first auxiliary signal (H_1) is used for the open-loop/closed-loop control of the internal combustion engine (1) as a function of an air mass flow rate sensor signal (L_1) of a first air mass flow rate sensor (HFM_1), and **in that** the influence of an interference variable (S_X), which influences the air mass flow rate sensor signal (L_1), on the closed-loop control of the internal combustion engine (1) is reduced as a function of the first auxiliary signal.

29. Method according to one of Claims 4 or 28, **characterized by** the following steps: derivation of the interference variable (S_X) from the first auxiliary signal (H_1), acquisition of the closed-loop controlled variable (R) as a function of the interference variable (S_X) '

30. Method according to one of the preceding claims, **characterized in that** the first air mass flow rate sensor (HFM_1) is embodied as a hot film air mass flow rate sensor.

31. Computer program for a control device of an internal combustion engine, in particular of a notor vehicle, having a program code, for carrying out the method according to one of Claims 1 to 30, if it is carried out on a computer or control device.

32. Control device (2) for an internal combustion engine (1), in particular of a motor vehicle, for carrying out open-loop/closed-loop control of the internal combustion engine (1) as a function of an air mass flow rate sensor signal (L_1) of a first air mass flow rate sensor (HFM_1), wherein at least one first auxiliary signal (H_1) is used, and wherein the first auxiliary signal (H_1) or a signal derived therefrom is compared (220) with the air mass flow rate sensor signal (L_1) or a signal derived therefrom, in order to acquire a difference signal (D_1_1), **characterized**
- **in that** a positive difference signal is acquired from the difference signal (D_1_1) by forming the absolute value (230),
- and **in that** a filtered difference signal (D_1_1*) is acquired by filtering the positive difference signal (0_1_1'),
- **in that** the air mass flow rate sensor signal (L_1) serves as a closed-loop controlled variable (R) if the positive difference signal (D_1_1') or the filtered difference signal (D_1_1*) drops below a predefinable threshold value S_1,
- and **in that** the auxiliary signal (H_1) serves as a closed-loop controlled variable (R) if the positive difference signal (D_1_1') or the filtered difference signal (D_1_1*) exceeds a predefinable threshold value S_1.

## Revendications

1. Procédé de gestion d'un moteur à combustion interne (1) notamment d'un véhicule automobile comportant un appareil de commande (2) pour commander/réguler le moteur à combustion interne (1) en fonction d'un signal de capteur de masse d'air (L-1), selon lequel on utilise au moins un signal auxiliaire (H-1) et le premier signal auxiliaire (H-1) ou un signal qui en est déduit est comparé au signal de capteur massique d'air (L-1) ou à un signal déduit de celui-ci (220) pour obtenir un signal de différence (D-1-1),
**caractérisé en ce qu'**
- à partir du signal de différence (D-1-1) en formant la valeur (230) on obtient un signal de différence positif,
- et en filtrant le signal de différence positif (D-1-1') on obtient un signal de différence (D-1-1*),
- on utilise le signal de capteur de masse d'air (L-1) comme grandeur de régulation (R) si le signal de différence positif (D-1-1') ou le signal de différence filtré (D-1-1*) passe en dessous d'un seuil prédéterminé (S-1) et
- le signal auxiliaire (H-1) sert de grandeur de régulation (R),
- si le signal de différence positif (D-1-1') ou le signal de différence filtré (D-1-1*) passe au-dessus d'un seuil prédéterminé (S-1).

2. Procédé selon la revendication 1,
**caractérisé en ce qu'**
on forme le signal de différence (D-1-1) par les étapes suivantes :
- différenciation du signal de capteur de masse d'air (L-1) et du premier signal auxiliaire (H-1) (210, 211) pour obtenir un signal différencié de capteur de masse d'air (L-1-1) et un signal auxiliaire différentié (H-1-1),
- formation de la différence (220) à partir de ces signaux différentiels (L-1-1, H-1-1) pour obtenir un signal de différence (D-1-1).

3. Procédé selon la revendication 2,
**caractérisé par**
les étapes suivantes :
- normer (210a) le signal différencié de capteur de masse d'air (L-1-1) sur une valeur moyenne dans le temps (L-1-m) du signal de capteur de masse d'air (L-1) et normer (211a) du signal auxiliaire différencié (H-1-1) sur une valeur moyenne dans le temps (H-1-m) du premier signal auxiliaire (H-1).

4. Procédé selon l'une quelconque des revendications précédentes,
**caractérisé en ce qu'**
on obtient le premier signal auxiliaire selon au moins l'une des méthodes suivantes :
- les grandeurs d'état du moteur à combustion interne
- un modèle de trajet d'un moteur à combustion interne
- le signal d'une sonde de gaz d'échappement
- un second capteur de masse d'air (HFM-2)
- un capteur de pluie
- un capteur d'ultrasons
- un capteur de masse d'air à fil chaud
- un capteur capacitif
- un capteur ohmique.

5. Procédé selon la revendication 1,
**caractérisé en ce qu'**
on effectue une comparaison (200) du premier signal auxiliaire (H-1) ou d'un signal déduit de ce premier signal auxiliaire (H-1), avec le signal de capteur de masse d'air (L-1) ou un signal déduit du signal de capteur de masse d'air (L-1), pour obtenir un résultat de comparaison (VE).

6. Procédé selon la revendication 5,
**caractérisé en ce qu'**
en fonction du résultat de comparaison (VE) on obtient une grandeur de régulation (R) pour la commande du moteur à combustion interne (1).

7. Procédé selon la revendication 4,
**caractérisé en ce que**
le premier signal auxiliaire (H-1) est obtenu à partir d'un signal d'un capteur capacitif, le capteur capacitif faisant partie intégrante du premier capteur de masse d'air (HFM-1).

8. Procédé selon la revendication 4,
**caractérisé en ce que**
le capteur capacitif est un condensateur à plaques ayant une première et une seconde plaques de condensateur,
la première plaque de condensateur étant formée par la surface du premier capteur de masse d'air (HFM-1).

9. Procédé selon la revendication 4,
**caractérisé en ce que**
le capteur ohmique comporte au moins deux électrodes de préférence en une matière résistant à la corrosion.

10. Procédé selon les revendications 4 ou 9,
**caractérisé en ce que**
le capteur ohmique est prévu sur la surface supérieure du premier capteur de masse d'air (HFM-1).

11. Procédé selon la revendication 1,
**caractérisé en ce que**
la comparaison (2) comprend les étapes suivantes :
formation de la différence (280) entre le premier signal auxiliaire (H-1) et le signal de capteur de masse d'air (L-1) pour obtenir une grandeur de régulation (R).

12. Procédé selon la revendication 11,
**caractérisé par**
l'étape suivante :
filtrage (340) du signal de capteur de masse d'air (L-1) avant de former la différence (380) pour obtenir un signal filtré de capteur de masse d'air (L-1*).

13. Procédé selon la revendication 12,
**caractérisé en ce qu'**
on utilise un filtre passe-bas (340a) pour effectuer le filtrage (340).

14. Procédé selon la revendication 13,
**caractérisé en ce que**
la fréquence limite du filtre passe-bas (340a) est dynamique et est choisie suivant les grandeurs d'état du moteur à combustion interne (1).

15. Procédé selon la revendication 14,
**caractérisé en ce que**
la fréquence limite du filtre passe-bas (340a) est choisie en fonction d'un modèle représentant le moteur à combustion interne.

16. Procédé selon la revendication 1,
**caractérisé en ce que**
le premier moyen auxiliaire (H-1) est obtenu par filtrage (440) par un filtre passe-bas (440a) à partir du signal de capteur de masse d'air (L-1) et est utilisé comme grandeur de régulation (R) pour commander le moteur à combustion interne (1).

17. Procédé selon la revendication 16,
**caractérisé en ce que**
la fréquence limite du filtre passe-haut (440a) est sélectionnée de manière dynamique.

18. Procédé selon la revendication 17,
**caractérisé en ce que**
la fréquence limite du filtre passe-haut (440a) est sélectionnée suivant les grandeurs d'état du moteur à combustion interne (1).

19. Procédé selon l'une des revendications 16 à 18,
**caractérisé par**
un second signal auxiliaire (H-2) obtenu par filtrage (442) par un filtre passe-bas (442a) à partir du signal de capteur de masse d'air (L-1) et
la grandeur de régulation (R) est obtenue à partir du premier signal auxiliaire (H-1), du second signal auxiliaire (H-2) et des grandeurs d'état du moteur à combustion interne (1).

20. Procédé selon la revendication 19,
**caractérisé en ce qu'**
on choisit de manière dynamique la fréquence limite du filtre passe-bas (442a).

21. Procédé selon la revendication 20,
**caractérisé en ce que**
la fréquence limite du filtre passe-bas (442a) est choisie suivant les grandeurs d'état du moteur à combustion interne (1).

22. Procédé selon la revendication 18 ou 21,
**caractérisé en ce qu'**
on choisit la fréquence limite du filtre passe-haut (440a)/filtre passe-bas (442a) en fonction d'un modèle représentant le moteur à combustion interne (1).

23. Procédé selon la revendication 4, selon lequel deux capteurs de masse d'air (HFM-1, HFM-2) sont installés dans la conduite d'aspiration (4) du moteur à combustion interne (1),
dans la conduite d'aspiration (4), la veine d'air d'entrée arrive tout d'abord sur le premier capteur de masse d'air (HFM-1) puis sur le second capteur de masse d'air (HFM-2) écarté à la distance (D) dans la direction d'écoulement de l'air aspiré, et
la comparaison (200) comprend les étapes suivantes :
temporisation (510) du signal de capteur de masse d'air (L-1) d'une durée de temporisation (delta-T) pour obtenir un signal de capteur de masse d'air retardé (L-1-delta-T),
soustraction (520) du premier signal auxiliaire (H-1) par rapport au signal de capteur de masse d'air retardé (L-1-delta-T), pour obtenir un signal de différence (D-L-H),
intégration (530) du signal de différence (D-L-H) pour obtenir un signal indicateur (A-L-H),
différenciation (540) du signal de capteur de masse d'air temporisé (L-1-delta-T) pour obtenir un signal de capteur de masse d'air différencié (L-1-delta-T-1),
formation (541) de l'amplitude du signal différencié du capteur de masse d'air (L-1-delta-T-1) pour obtenir un signal positif de capteur de masse d'air (L-1 -delta-T-1'),
différenciation (542) du premier signal auxiliaire (H-1) pour obtenir un signal auxiliaire différencié (H1-1),
formation (543) de l'amplitude du signal auxiliaire différencié (H1-1) pour obtenir un signal auxiliaire positif (H1-1'),
soustraction (560) du signal auxiliaire positif (H1-1') du signal positif de capteur de masse d'air (L-1-delta-T-l') pour obtenir un autre signal de différence (Z-Dif).

24. Procédé selon la revendication 23,
**caractérisé par**
les étapes suivantes :
comparaison (570) du signal indicateur (A-L-H) à au moins une valeur de seuil si le signal indicateur (A-L-H) dépasse un seuil :
obtention (580) de la grandeur de régulation (R) à partir du premier signal auxiliaire (H-1) et du signal indicateur (A-L-H) si le signal de différence (Z-Dif) est positif,
obtention (581) de la grandeur de régulation (R) à partir du signal de capteur de masse d'air (L-1) et du signal indicateur (A-L-H) si le signal de différence (Z-Dif) est négatif.

25. Procédé selon les revendications 23 ou 24,
**caractérisé en ce que**
les deux capteurs de masse d'air (HFM-1, HFM-2) sont juxtaposés et on supprime l'étape de temporisation (510) et on munit le second capteur de masse d'air (HFM-2) d'un séparateur de gouttes d'eau.

26. Procédé selon la revendication 25,
**caractérisé en ce qu'**
on tient compte du comportement dynamique du modèle simulant le séparateur de gouttes d'eau pour le traitement du signal de capteur de masse d'air (L-1) et/ou du premier signal auxiliaire (H-1).

27. Procédé selon l'une des revendications 23 à 26,
**caractérisé en ce qu'**
on intègre les deux capteurs de masse d'air (HFM-1, HFM-2) dans une installation commune de capteur de préférence dans un boîtier commun.

28. Procédé selon l'une des revendications précédentes,
**caractérisé en ce que**
pour la commande/régulation du moteur à combustion interne (1), en fonction d'un signal de capteur (L-1) d'un premier capteur de masse d'air (HFM-1) on utilise un premier signal auxiliaire (H-1) et en fonction du premier signal auxiliaire, on diminue l'influence d'une grandeur perturbatrice (S-X) influençant le signal de capteur de masse d'air (L-1) pour la régulation du moteur à combustion interne (1).

29. Procédé selon l'une des revendications 4 ou 28,
**caractérisé par** les étapes suivantes :
on déduit la grandeur perturbatrice (S-X) du premier signal auxiliaire (H-1),
on obtient la grandeur de régulation (R) en fonction de la grandeur perturbatrice (S-X).

30. Procédé selon l'une des revendications précédentes,
**caractérisé en ce que**
le premier capteur de masse d'air (HFM-1) est un capteur de masse d'air à fil chaud.

31. Programme d'ordinateur pour un appareil de commande d'un moteur à combustion interne notamment d'un véhicule automobile, avec des codes de programme pour exécuter le procédé selon l'une des revendications 1-30 lorsqu'il est exécuté sur un ordinateur ou un appareil de commande.

32. Appareil de commande (2) pour un moteur à combustion interne (1) notamment un véhicule automobile pour la commande/régulation du moteur à combustion interne (1) en fonction d'un signal de capteur de masse d'air (L-1) fourni par un premier capteur de masse d'air (HFM-1), en utilisant au moins un premier signal auxiliaire (H-1), et ce premier signal auxiliaire (H-1) ou un signal déduit de celui-ci étant comparé au signal de capteur de masse d'air (L-1) ou à un signal déduit de celui-ci (220) pour obtenir un signal de différence (D-1-1),
**caractérisé en ce qu'**
à partir du signal de différence (D-1-1), en formant l'amplitude (230) on obtient un signal de différence, positif,
et en filtrant le signal de différence, positif (D-1-L') on obtient un signal de différence, filtré (D-1-1*),
- le signal du capteur de masse d'air (L-1) sert de grandeur de régulation (R) si le signal de différence, positif (D-1-1') ou le signal de différence, filtré (D-1-1*) passe en dessous d'une valeur de seuil prédéfinie (S-1), et
- le signal auxiliaire (H-1) sert de grandeur de régulation (R) si le signal de différence, positif (D-1-1') ou le signal de différence, filtré (D-1-1*) passe au-dessus d'une valeur de seuil (S-1) prédéfinie.
